# EUROPEAN PATENT SPECIFICATION

(11) **EP 2 414 693 B1**
(45) Date of publication and mention of the grant of the patent: **03.07.2013**
(21) Application number: 08875117.7
(22) Date of filing: 22.12.2008
(51) Int. Cl.: F16C 19/52, G01L 1/22

(54) **SENSORIZED BEARING UNIT**
LAGEREINHEIT MIT SENSOR
UNITÉ DE PALIER MUNIE DE CAPTEUR

(43) Date of publication of application: 08.02.2012
(73) Proprietor: Aktiebolaget SKF, 415 50 Göteborg (SE)
(72) Inventor: MOL, Hendrik, Anne, NL-4254 XG Sleeuwijk (NL); VAN DE SANDEN, Johannes, Franciscus, NL-3435 DT Nieuwegein (NL)
(74) Representative: Burö, Sven Peter
(86) International application number: PCT/EP2008/011045
(87) International publication number: WO 2010/072232

(56) References cited:
- DE-A1- 4 218 949
- DE-A1- 10 136 438
- US-A1- 2002 059 835
- US-A1- 2007 277 612

## Description

### Technical Field

The present invention concerns a bearing or bearing unit provided with one or more sensors for measuring strains in the bearing. The present invention also concerns a method of attaching the one or more sensors to the bearing by means of a heat joining process.

### Backaround with state of art

Bearings are devices that permit constrained relative motion between two parts. They may be used in many different types of machinery to retain and support rotating components such as, for example, a wheel on a vehicle, a vane on a windmill or a drum in a washing machine. A typical bearing comprises inner and outer rings and a plurality of rolling elements, and may further comprise a cage to retain the rolling elements.

During use, the bearing is subjected to different loads, both static and dynamic. The static load is mainly due to the weight supported by the bearing and may also be due to a preload with which the bearing is mounted. The dynamic loads are time-dependent and are due to the operating conditions.

In many systems, it is desirable to be able to monitor the load acting on a bearing. In modern vehicles, for example, load data from the wheel bearings are used in the control of vehicle stability systems. Displacement sensors such as strain sensors are commonly applied to bearings to measure load and deformation. In some cases, plastic foil sensors are adhesively bonded to e.g. an outer circumference of a bearing outer ring. Adhesive bonding has many disadvantages, however. The bearing surface must be cleaned and prepared for bonding, the attachment is a manual process, the adhesive can take several hours to cure and, moreover, the adhesive can be subject to creep over time, which impairs the reliability of the sensor signal.

Metal foil strain sensors can also be used. Such strain sensors are attached to a bearing surface by means of e.g. spot welding, whereby the metal foil is attached around its entire periphery using a specific pattern of spot welds.

The attachment of foil strain sensors to a bearing surface is essentially a manual process, making these sensors unsuited for automated mounting and integration in a production-line environment. Furthermore, foil strain sensors have a low strain sensitivity, which places stringent requirements on a signal conditioner when used at the low operating voltages common in contemporary electronic systems.

DE 101 36 438 A1 discloses a sensorized bearing unit and a method of attaching a strain sensor to a surface according to the preamble of claim 1 and claim 14.

Thus, there is room for improvement in terms of realizing a bearing unit which enables a strong and stable strain signal to be sensed, whereby the sensor can be attached to the bearing in a straightforward automated process.

### Summary

The present invention defines a bearing unit comprising a bearing provided with one or more strain sensors, where the bearing comprises an inner ring and an outer ring, and where the one or more strain sensors comprises a sensing element integrated on a support member. According to the invention, the support member is a flat plate made of a metal material and is attached to a surface of the bearing only by means of a first weld seam and a second weld seam located at first and second lateral ends of the support member.

The sensing element of the strain sensor is integrated on a surface of the support member and is adapted to measure strains on that surface, which will be designated as a sensing surface. In one embodiment of the invention, the sensing element is a thick-film resistor strain gauge that is screen-printed on the sensing surface of the support member. In a further embodiment, the sensing element is a thin-film resistor strain gauge deposited on the sensing surface of the support member. The sensing element of the strain sensor

will typically comprise one or more strain gauges which convert mechanical displacement into an electrical signal. The strain gauge may be formed from, for example, a resistor material or a semiconductor material. Examples of resistor materials are metals, metal oxides and ceramics. Specific examples include ruthenium oxide, tantalum nitride, lead oxide, bismuth ruthenate, bismuth iridate and nickel-chromium.

Preferably, the support member of the one or more strain sensors has a length that is greater than its width, whereby the sensing element is oriented in the longitudinal direction to be sensitive to compressive or elongation strains and the support member is attached at each lateral end along its width. According to one aspect of the invention, the support element is dimensioned such that when the first and second weld seams are subjected to forces that tend to pull the seams away from each other or push them together, the sensing surface correspondingly stretches or compresses, without experiencing significant bending strain. Thus, the support member has a predefined thickness such that when strain is induced on the sensing surface of the support member as a result of a deformation of the bearing surface, a distance between the sensing surface and a neutral plane of zero bending through the support member is small enough to result in a bending strain of less than 10% of the total strain induced on the sensing surface. In some applications, the predefined thickness is such that the bending strain induced on the sensing surface of the support member is less than 5% of the total strain induced.

The minimum thickness of the support member is partly governed by its dimensions. Suitably, the support member is sufficiently thick in relation to its length to prevent buckling of the support member under the shear and compressive loads associated with the application in question. Also, the support member must be thick enough to serve as a substrate in a thick-film printing process or a thin-film deposition process. Typically, the support member has a thickness of greater than 0.2 mm and less than 1.0 mm. Preferably, the thickness lies between 0.4 mm and 0.7 mm.

Because the support member of a strain sensor according to the invention is a thin flat plate that closely follows the bearing surface to which it is attached, the strains induced at the attachment places are substantially transferred to the sensing surface of the support member. In other words, the attached strain sensor has a high mechanical gauge factor of at least approximately 75%.

Preferably, the support member is attached to the bearing surface at each lateral end, along the full width of each lateral end, and the first and second weld seams are executed over the full thickness of the support member. The first and second weld seams then define a cross-sectional area of attachment between the support member and the bearing surface that is equal to the width of the respective first or second weld seam multiplied by the thickness of the support member. In order to maximise the transfer of stresses on the attachment areas of the weld seams to the section of the support member that comprises the sensing surface, it is advantageous if the first and the second weld seams have a cross-sectional area of attachment that is at least equal to the cross-sectional area of the section of the support member that comprises the sensing surface.

In a further aspect of the invention, the first and second weld seams each have a cross-sectional area of attachment that is greater than the cross-sectional area of the support member through the sensing surface. This means that the stress experienced by the section of the support member that comprises the sensing surface becomes more concentrated, which increases the strain induced on the sensing surface, thereby enhancing the signal strength of the strain sensor.

In one embodiment, the support member comprises a narrow portion located between the first and second lateral ends of the support member, which portion has a smaller width than the first and second lateral ends. The support member may thus have an elongated H-shape, or can be shaped like a bowtie. The sensing element of the strain sensor is integrated on the narrow portion, which therefore comprises the sensing surface. Assuming that the first and second weld seams are executed over the full, maximum width of the support member, the narrow portion has a smaller cross-sectional area than the first and second weld seams.

In a further embodiment of this aspect of the invention, the support member comprises at least one through-cut. The support member may then be essentially rectangular in shape, whereby the through-cut begins at a point on one longitudinal edge of the support member, extends first in a lateral direction and then in a longitudinal direction. The through-cut therefore comprises a lateral portion and a longitudinal portion, and the sensing element of the strain sensor is integrated on a sensing surface of the support member that lies between the longitudinal portion of the through-cut and the opposite longitudinal edge of the support member. Thus, the sensing surface has a width that is delimited in one direction by the longitudinal portion of the through-cut, meaning that the sensing surface can have a smaller cross-sectional area than the cross-sectional attachment area of the first and second weld seams. Preferably, the support member comprises a second, oppositely oriented through-cut, such that the width of the sensing surface is delimited in both directions, to further enhance the measurable strain on the sensing surface.

A bearing unit according to the invention comprises one or more strain sensors comprising a support member that is attached to a bearing surface by means of first and second weld seams. Weld seams are to be understood as line attachments that are produced in a heat-joining process such as laser welding, laser brazing or resistance welding/brazing. In order to enable the support member to be heat-joined to a bearing made from a bearing steel (high-carbon steel) such as e.g. SAE1055, SAE 1070 or SAE 52100, the metal support member preferably comprises a low carbon steel, or electrodeposited and etched nickel, including alloys thereof, or titanium, including alloys thereof. In some applications the sensing surface of the support member comprises a high-chromium steel (stainless steel), which forms an excellent substrate for the thick-film printing or the thin-film deposition of a resistive strain gauge.

For thick film-resistors, the film may be deposited on the support member using conventional screen-printing technology. To facilitate this process, the metal support member may first be subjected to a suitable heat treatment. Also, the metal oxide and ceramic materials may, for example, be mixed with additional ingredients such as a glass powder and a liquid carrier. The resulting conductive ceramic composition is then fused at a temperature of typically 750 to 950°C. For a number of resistive ceramics (e.g. ruthenium oxide), it is preferable to deposit them on one or more dielectric layers since this has been found to result in an improved bond with the low carbon steels as herein described. For this reason, the support for the sensor may comprise a coated substrate, wherein the coating comprises one or more dielectric layers such as, for example, glass, a glass-containing material or a metal oxide, such as aluminium oxide.

Thin film resistors may also be made by sputtering (e.g. vacuum deposition) the resistive material onto the support member. The thin film is then etched in a process akin to making printed circuit boards.

If desired, thick and thin film resistors may be trimmed to an accurate value by abrasive or laser trimming. The strain gauge pattern may be chosen so as to offer measurement of tension, compression and/or shear. Advantageously, the lateral ends of the support member may comprise a stainless steel with a high Nickel content of 10-14 wt.%. Alternatively, a nickel-containing filler material may used during e.g. a laser welding process. The nickel acts as an austenite stabilizer and helps toughen the mixed fusion zone created during the heat-joining process that is used.

In some embodiments of a bearing unit according to the invention, the support member of the one or more strain sensors is attached to a radially outer surface of the bearing outer ring. For measuring radial loads, the one or more strain sensors may be attached with a circumferential orientation. For measuring axial loads, the one or more strain sensors are suitably attached with an axially sensitive orientation. In applications where a bearing is subject to axial and radial loads, the bearing may advantageously comprise a plurality of sensors, whereby at least one sensor has an axially sensitive orientation and at least one sensor has a circumferentially sensitive orientation. The one or more strain sensors may also be attached to a radially inner surface of the bearing inner ring. Preferably, when measuring operating loads, the sensors are mounted on a surface of the bearing ring which is non-rotational during operation of the bearing.

Alternatively, or additionally, the support member of the one or more strain sensors may be attached to an end face of the bearing inner ring. This is advantageous in applications where a bearing is mounted on a tapered seating. Such a mounting configuration causes the diameter of the inner ring to increase, which in turn affects the internal clearance of the bearing. An optimal internal clearance can therefore be achieved by sensing the strains induced on the end face of the inner ring as a result of the increased ring diameter.

In a further development of a bearing unit according to the invention, the one or more strain sensors are attached to a surface of one or more notches in a bearing ring. The one or more notches may be provided on the radially outer surface of the bearing outer ring and/or on the radially inner surface of the bearing inner ring and/or on an end face of the bearing inner ring. Advantageously, each notch has a depth that is greater than the thickness of the support member of each strain sensor, meaning that the (inner and outer) installation diameter and the axial installation width of the bearing remain unchanged after attachment of the sensors.

According to the invention, the support member of the one or more strain sensors is executed as a thin flat plate. This is particularly advantageous in combination with attachment by means of first and second weld seams, because the welding/brazing process can be carried out using a welding/brazing angle of approximately 90 degrees. In other words the welding electrode or the laser beam can be positioned directly above the lateral ends of the support member. This enhances the automatability of the welding/brazing process. Also, the first and second weld seams may be executed simultaneously by means of e.g. two side-by-side resistance welding electrodes or two side-by-side laser beams.

Thus, in a bearing unit according to the invention, the support member of the one or more strain sensors may attached in a fast, automated process, which is an important characteristic in a production-line environment where each step in the production process may take only a few seconds. Moreover, a welding/brazing angle of approximately 90 degrees is especially advantageous when attaching a strain sensor in a notch in a bearing ring. The dimensions of the notch can be limited to the minimum dimensions necessary to accommodate the strain sensor. As a result, the notch will have a negligible effect on the structural strength of the bearing.

The present invention also defines a method of attaching a strain sensor to a surface of a bearing comprising an inner ring and an outer ring, the strain sensor comprising a sensing element integrated on a sensing surface of a metal support member executed in the form of a flat plate. The method comprises a step of attaching the strain sensor to the bearing surface only by means of a first weld seam and a second weld seam located at first and second lateral ends of the support member. In one embodiment of the method, the first and second weld seams are formed in a welding or brazing process using a weld or braze angle of approximately 90 degrees. In other embodiments, particularly when laser welding is applied, a weld angle of less than 90 degrees (relative to the bearing surface) can be applied. For example, a weld angle of between 20 and 30 degrees.

When the metal support member is attached to a surface of a bearing by means of welding or brazing, a heat affected zone is created around the first and second weld seams. In other words, the metallurgical structure of the bearing and of the support member changes locally, inducing a local stress. Potentially, the strain on the sensor element could be subject to an essentially uncontrolled offset after the attachment process. Furthermore, a one-time offset correction procedure (i.e. calibration) at the end of the attachment process is not sufficient to guarantee a stable strain signal over time, since the residual stress at the attachment places will change during work loading of the bearing. This is a work-induced relaxation of the stress in the heat affected zones of the bearing and of the support member.

Therefore, in a further development of the method according to the invention, the method comprises a step of stress relaxation. In one embodiment, the stress-relation step involves a heat-treatment process in which the first and second weld seams are locally reheated after the step of welding or brazing. The local reheating may be performed using a laser beam or a hot electrode or by means of eddy-current heating. The heat-treatment process can also comprise local preheating of the attachment places on the support member and on the bearing surface, prior to the step of welding or brazing.

Additionally, or alternatively, the step of stress relaxation can comprise subjecting the first and second weld seams to high cyclical loads. This can be done by means of ultrasonic excitation. The vibrations induced "shake out" and settle the residual stress in the zone around the first and second weld seams, to a level such that the normal operating loads on the bearing no longer produce a work-induced relaxation.

Thus, a bearing unit according to the invention enables stable and predictable measurement of strains on a bearing surface. The inventive unit can also be produced in a fast and straightforward manner that is suitable for integration in an automated production line. Other advantages of the present invention will become apparent from the detailed description and accompanying figures.

### Brief Description of the Drawings

The invention will now be described in more detail for explanatory and in no sense limiting purposes with reference to the following figures, in which:
- Figure 1: is a schematic perspective view of a surface of a bearing unit according to the invention, showing one example of a strain sensor suitable for use with the present invention; and
- Figure 2: is a top view of a surface of a bearing unit according to the invention, showing a further example of a strain sensor suitable for use with the present invention; and
- Figure 3a: is a top view of a surface of a bearing unit according to the invention, showing a still further example of a strain sensor suitable for use with the present invention; and
- Figure 3b: is a cross-sectional view through a line X-X' on Figure 3a; and
- Figure 4a: is an axial view of an embodiment of a bearing unit according to the invention; and
- Figure 4b: is an axial view of a further embodiment of a bearing unit according to the invention.

### Detailed Description

When there is a need to measure the loads acting on a rotationally supported component, one way of accomplishing this is to measure deformation of a bearing ring in a bearing that is used to support the component. The loads cause the bearing ring to deform, which deformation can be measured by attaching one or more strain sensors to a surface of the bearing ring, e.g. an outer circumference of the bearing outer ring. Strain sensors, such as plastic-foil strain gauges, can be adhesively bonded to the bearing surface, but adhesive bonding is a time-consuming process that is usually carried out manually. A further drawback is that over time, the adhesive can be subject to creep, which impairs the reliability of the strain signal. Metal-foil strain gauges can also be applied, whereby the perimeter of the metal foil gauge is welded to the bearing surface using a specific pattern of spot welds. Thus, the spot welding process is relatively time-consuming and complex. Foil strain gauges (metal foil and plastic foil), moreover, have a low sensitivity to strains, which places stringent requirements on a conditioner when operating at the low supply voltages common in contemporary electronic systems. In addition, foil strain gauges have a low resistance, causing considerable dissipation.

Thus, there is a need for a strain sensor with a high sensitivity to strains and a high resistance which can be attached to a bearing surface in a fast, automated process, and which produces a strong and stable strain signal over the life of the bearing.

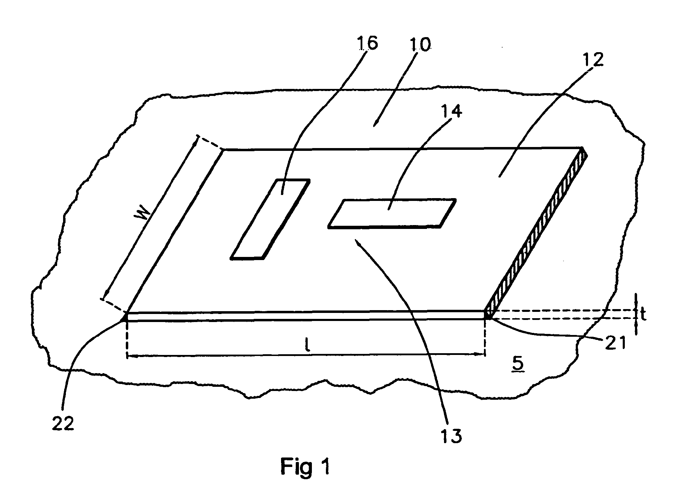

An example of a strain sensor attached to a bearing surface, which fulfils the above-mentioned requirements, is schematically shown in Figure 1. The strain sensor 10 comprises a metal support member 12, which preferably comprises a low carbon steel, or electrodeposited and etched nickel, including alloys thereof, or titanium, including alloys thereof. These materials have been found to be compatible with bearing steels, such as SAE1055, SAE1070, SAE 52100 (100Cr6), DIN 100CrMn6, DIN 102CrMo17 and DIN 100CrMo7-3, for the purposes of welding or brazing. Examples of preferred low carbon steels for the support 12 include stainless and heat resistance steels such as AISI 304, AISI 304L, AISI 316, AISI 316L and 17-4PH and AISI 430. Low carbon steels for the support member 12 have the further advantage of having a coefficient of thermal expansion that is essentially equal to that of bearing steels.

A resistive strain gauge is printed and sintered (thick film), or deposited (thin film), directly onto a surface 13 of the support 12. The strain gauge senses strains induced on this surface, which will be referred to as a sensing surface 13. In the example shown, the strain gauge comprises first and second elements 14, 16 orientated in mutually orthogonal directions. In many applications, the first element 14 will be an active element to sense strains and the second element 16 will be a passive element to compensate for temperature effects. Half-bridge configurations are also possible.

According to the invention, the support member 12 is executed as a thin, flat plate that is attached to a surface 5 of the bearing only by means of a first weld seam 21 and a second weld seam 21 located at first and second lateral ends of the support member 12. The first and second weld seams 21, 22 are to be understood as line attachments that are produced in a heat joining process selected from one of a welding process, a brazing process or a soldering process. Laser welding and laser brazing are examples of preferred heat joining processes, as they can be automated are highly suitable for integration in a production line environment.

Preferably, the support member has a length I that is greater than its width w, and is adapted to be sensitive in the direction of its length. The first and second weld seams 21, 22 are oriented in the width direction of the support member 12. The support member may have a length to width ratio of around two to one. An advantage of attaching the strain sensor 10 by means of first and second weld seams 21, 22 is that the strain sensor has maximum sensitivity in one measurement direction, and a significantly lower sensitivity to strains in other directions. This is particularly advantageous when measuring bearing ring deformation due to radial and moment forces. For example, if the sensor is attached with a circumferential orientation to measure the circumferential strains induced in the bearing ring, the measured signal is much less influenced by axial and shear strains in comparison with strain sensors that are attached to a bearing over their full surface area. Likewise, when attached with an axial orientation, the sensor is predominantly sensitive to axial strains and is only marginally influenced by shear and circumferential strains.

When mounted on a bearing surface such as the outer circumference of a bearing outer ring, with a circumferential spacing between the first and second weld seams 21, 22, the length of the support member 12 can be selected in relation to the outer circumference such that the support member undergoes a minimum of bending when attached to the curved bearing surface, so that the sensing surface 13 is not subject to a high pre-stress. For example, in the case of a bearing with an outside diameter of 20 cm, the support member 12 may suitably have a length I of 10 mm, with a corresponding width w of 5 mm and a thickness t of 0.5 mm. Alternatively, suitable grooves or notches can be machined into the radially outer surface of the bearing to provide an essentially flat surface for the support member 12.

Further, the dimensions of the support member 12 are selected such the support member does not buckle when subjected to compressive or shear stresses. In other words, the support member has a sufficiently low slenderness ratio, which ratio is governed by the length of the support member and its thickness.

Suitably, the support member has a thickness t greater than 0.2 mm, which is an adequate substrate thickness for the thick film or thin film resistive strain gauge and also provides adequate buckling resistance in combination with typical surface dimensions of the support member.

In a further aspect of the invention, the thickness t of the support member 12 is such that predominantly compressive strains or elongation strains are induced on the sensing surface 13 of the support member.

The support member 12 is attached to the bearing surface 5 by means of two spaced-apart weld seams 21, 22. When a force is exerted on the weld seams, for example a force that acts to pull the seams away from each other, the support member will stretch and a positive elongation strain will be induced on the sensing surface 13. As a result of the two-point attachment, the force also results in a small bending moment being induced on the sensing surface, the magnitude of which is governed by a distance between the sensing surface 13 and a neutral plane of zero bending though the support member. In the case of a flat plate, the neutral plane will essentially coincide with a mid-plane halfway through the support member 12. Due to the bending moment, a negative (compressive) strain will be induced on the sensing surface 13, which interferes with the positive strain induced from the stretching of the support member, thereby reducing the strength of the measured strain signal. Similarly, if a force is exerted on the first and second weld seams 21, 22 that acts to push the seams closer together, a negative (compressive) strain is induced on the sensing surface 13, while the bending moment induces a positive strain that again diminishes the measured strain signal.

Thus, in a bearing unit according to the invention, the thickness t of the support member 12 is preferably such that the strain induced on the sensing surface 13 as a result of a bending moment is less than 10% of the total strain acting on the sensing surface. In some embodiments, the strain induced on the sensing surface due to bending moment is less than 5% of the total strain acting on the sensing surface. In practice, the distance between the sensing surface 13 and the mid-plane though the support member is preferably less than 0.5 mm, meaning that the thickness t of the support member is preferably less than 1.0 mm. A preferred thickness range for the support member 12 is 0.2mm < t < 1.0mm. A more preferred thickness range for the support member is 0.4mm < t < 0.7mm, to balance the need for buckling resistance of the support member 12 with the need for a low bending moment.

Because the support member 12 is a thin, flat plate, the sensing surface 13 closely follows the bearing surface 5 and a deformation of the bearing surface is accurately translated into a strain on the sensing surface. In other words, the attached strain sensor 10 has a sufficiently high mechanical gain, of at least approximately 75%, to eliminate the need for an additional electronic gain by means of e.g. semiconductor technology. A high mechanical gain also allows less stringent requirements to be placed on the tolerances for the first and second weld seams.

To ensure a good transfer of strain to the sensing surface 13, the first weld seam 21 and the second weld seam 22 preferably each have a cross-sectional area of attachment that is at least equal to a cross-sectional area of the sensing surface 13 that is subject to stress. In the example of Figure 1, showing a rectangular shaped support member, the cross-sectional area, Aₛₛ, of the sensing surface 13 subject to stress is defined by the width w of the support member 12 and its thickness t. In other words, Aₛₛ = w x t. Consequently, the first and second weld seams 21, 22 are preferably continuous welds seams executed over the full width w and the full thickness t of the support member. The cross-sectional area of attachment, A_{w1}, of the first weld seam 21 and the cross-sectional area of attachment, A_{w2}, of the second weld seam 22 are then each equal to w x t.

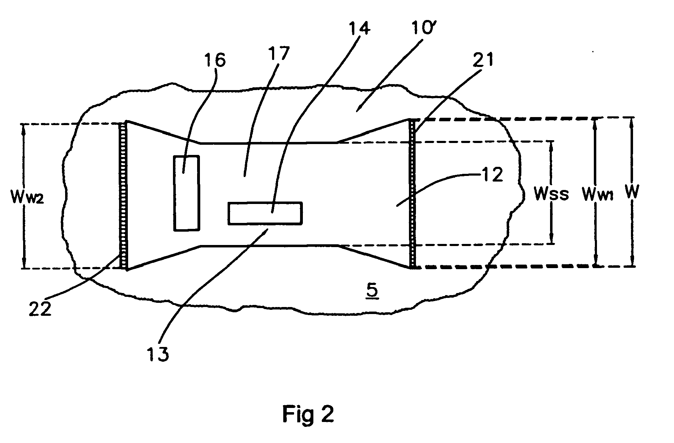

In a further aspect of the invention, the strain sensor is designed such that the first and second weld seams can each have a cross-sectional area of attachment that is greater than the cross-sectional area through the sensing surface of the support member. A top view of an embodiment of an attached strain sensor according to this aspect of the invention is shown in Figure 2.

As described previously, a strain sensor 10' comprising a metal support member 12 is attached to a bearing surface 5 by means of a first weld seam 21 and a second weld seam 22. In this embodiment, the support member 12 of the strain sensor 10' comprises a section 17 that is narrower in width than a maximum width w of the support member at each lateral end, and narrower than a width w_{w1} of the first weld seam 21 and a width w_{w2} of the second weld seam 22. According to the further aspect of the invention, at least the active sensing element 14 of the strain gauge is integrated on the narrow section 17 of the support member 12, which section comprises the sensing surface 13. The passive, compensation element 16 can also be integrated on the narrow section 17, or (as shown) can be integrated on a wider section of the support member. Again, the first 21 and second 22 weld seams are preferably continuous weld seams executed over the full width and thickness of the support member 12. Therefore, given that the narrow section 17 has a width wₛₛ that is less than W_{w1} and less than w_{w2}, the narrow section 17 has a cross-sectional area that is smaller than either one of the first and second weld seams. When a force acts on the first and second weld seams 21, 22, the attachment areas with the lateral ends of the support member 12 are subject to stress. This stress is substantially transferred to the narrow section 17 comprising the sensing surface 13. Because the narrow section 17 has a smaller cross-sectional area than the attachment area of the first and second weld seams 21, 22, the narrow section 17 acts as a stress concentrator. A larger strain value can therefore be sensed on the sensing surface 13 than when the sensing surface has the same cross-sectional area as the welds. To ensure an even transfer and distribution of stress through the sensing surface 13, the first and second weld seams preferably have the same cross-sectional area of attachment.

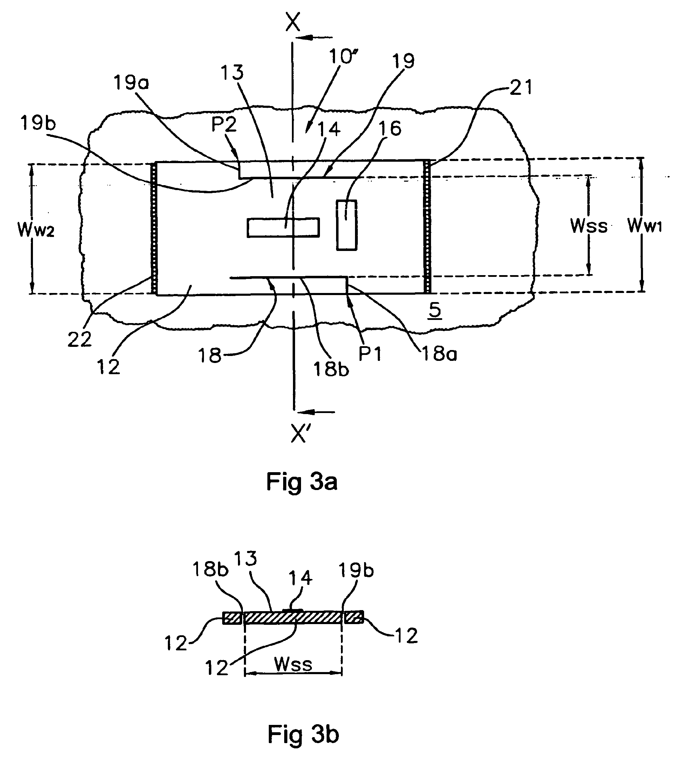

In the embodiment shown in Figure 2, the sensing surface on which strain is sensed is located on a section of the support member that is narrower than its first and second lateral ends, to concentrate the strain on that section and enhance the measured strain signal. The same effect can be achieved by means of through-cuts, as shown in Figure 3a.

Figure 3a illustrates a top view of a strain sensor attached to a bearing, according to a further embodiment the invention. As described previously, a strain sensor 10" comprising a metal support member 12 is attached to a bearing surface 5 by means of a first weld seam 21 and a second weld seam 22. The strain sensor comprises a strain gauge having at least an active element 14 that senses strains induced on a sensing surface 13 of the support member 12. In this embodiment, the support member comprises a first through-cut 18 and a second through-cut 19. The first through-cut 18 extends in a lateral direction for a first distance, starting from a point P₁ on one longitudinal edge of the support member, the point P₁ being closer to the first weld seam 21 than to the second weld seam 22. The first through cut 18 then continues in longitudinal direction towards the second weld seam 22, without reaching the second weld seam 22. Thus, the first through-cut 18 has a lateral portion 18a and a longitudinal portion 18b. The second through-cut 19 extends in a lateral direction for a second distance, starting from a point P₂ on an opposite longitudinal edge of the support member, the point P₂ being closer to the second weld seam than to the first weld seam. The second through-cut 19 then continues in a longitudinal direction towards the first weld seam 21, without reaching the first weld seam 21. Thus, the second through-cut 19 has a lateral portion 19a and a longitudinal portion 19b. Preferably, the longitudinal portion 18b, 19b of one through-cut ends at a position opposite from the lateral portion 18a, 19b of the other through-cut. According to this embodiment of the invention, the sensing surface 13 of the support member 12 is located between the longitudinal portions 18b, 19b of the first and second through-cuts 18, 19. Consequently, the sensing surface 13 has a width wₛₛ that is smaller than the width Ww₁ of the first weld seam 21 and that is smaller than the width w_{w2} of the second weld seam 22. This can be seen more clearly in Figure 3b, which is a cross-sectional view of the attached strain sensor taken through the line X-X' on Figure 3a, viewed from the direction indicated by the arrows.

The width wₛₛ of the sensing surface 13 is delimited by the longitudinal portion 18b of the first through-cut and by the longitudinal portion 19b of the second through-cut. As described for the embodiment shown in Figure 2, the strain sensing element 14 is located on a section of the support member 12 that has a smaller cross-sectional area that the cross-sectional attachment area of each of the first and second weld seams, thereby enhancing the measurable strain on the sensing surface. A further advantage of the embodiment shown in Figures 3a and 3b is that as a result of the first and second through-cuts 18, 19, the section of the support member 12 comprising the sensing surface 13 is connected in a non-rigid manner with the sections of the support member that are welded to the bearing surface 5. The non-rigid connection facilitates a stable and predictable transfer of strain from the first and second weld seams 21, 22 to the sensing surface 13 of the support member, making the attached strain sensor 10" less susceptible to variations in the weld quality of the weld seams.

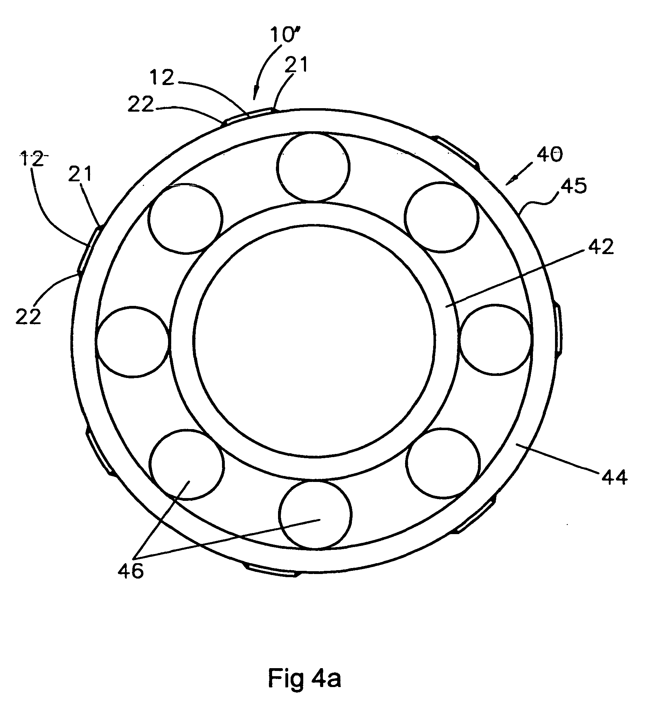

An embodiment of a bearing unit according to the invention is illustrated in Figure 4a. The bearing 40 comprises an inner ring 42, an outer ring 44 and a plurality of rolling elements 46 distributed therebetween. Often, the bearing will also comprise a cage (not shown) to retain the rolling elements in an even spacing. According to the invention, the bearing is provided with one or more strain sensors comprising a flat metal support member 12 that is welded to a surface of the bearing by means of first weld seam 21 and a second weld seam 22. The strain sensor may, for example, be of the type shown in Figure 3a.

In this embodiment, the bearing 40 is provided with a plurality of strain sensors 10", attached with a circumferential orientation on a radially outer surface 45 of the outer ring 44. Such a configuration is suitable for determining radial loads on the bearing. In applications where a bearing is subject to axial and radial loads, the bearing may advantageously comprise a plurality of sensors, whereby at least one sensor has an axially sensitive orientation and at least one sensor has a circumferentially sensitive orientation. The one or more strain sensors may also be attached to a radially inner surface of the bearing inner ring. Preferably, the sensors are mounted on a surface of the bearing ring which is non-rotational during operation of the bearing. Also, in order to avoid bending the flat support member 12 when it is attached to the curved surface 45 of the bearing 40, the dimensions of the support member are preferably very small in relation to the radius of curvature of the bearing surface. Alternatively, the first and second weld seams 21, 22 may be executed such that the seams additionally serve as feet for the support member 12.

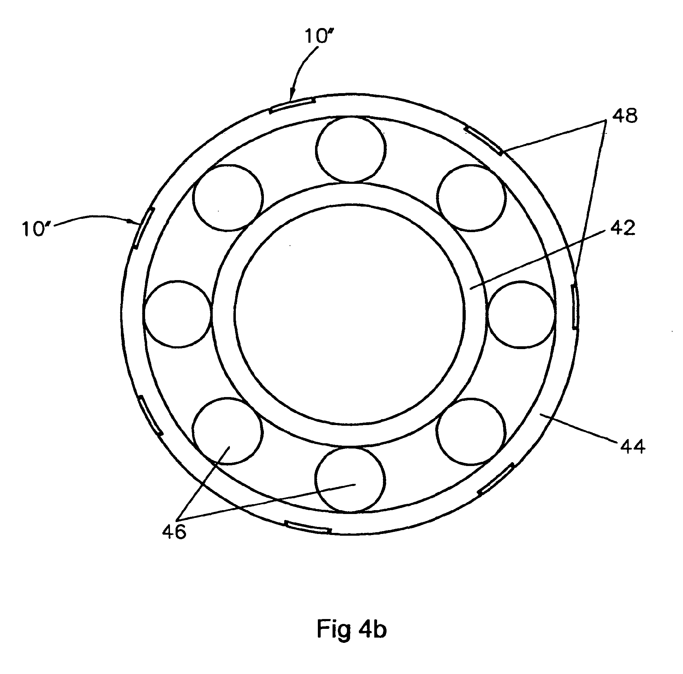

In a further embodiment, the one or more strain sensors may be attached to a surface of one or more notches in a bearing ring. Figure 4b shows an example of such an embodiment where the bearing outer ring 44 is provided with a plurality of notches 48 and a corresponding plurality of strain sensors 10" attached to a surface of the notch by means of first and second weld seams. Advantageously, each notch has a depth that is greater than the thickness of the support member of each strain sensor. This means that the installation diameter of the bearing remains unchanged after attachment of the sensors, enabling the bearing, to be tightly fitted within a housing, for example. Also, the notches 48 can be machined with an essentially flat surface, which solves the problem of how to attach a flat plate to a curved object. Notches are particularly advantageous when the one more strain sensors are attached on a radially inner surface of the bearing inner ring 42.

In a still further embodiment, the one or more strain sensors may be attached to an end face of the bearing inner ring, in order to measure expansion of the inner ring as a result of e.g. mounting the bearing on a tapered seating.

A number of aspects/embodiments of the invention have been described. It is to be understood that each aspect/embodiment may be combined with any other aspect/embodiment unless indicated to the contrary. Moreover, the invention is not restricted to the described embodiments, but may be varied within the scope of the accompanying patent claims.

**Reference numerals**

| | |
|---|---|
| 10, 10', 10" | strain sensor |
| 12 | support member |
| 13 | sensing surface of support member |
| 14 | active sensing element of strain sensor |
| 16 | passive, thermal compensation element of strain sensor |
| 17 | narrow section of support member |
| 18 | first though-cut in support member |
| 18a | lateral portion of first through-cut |
| 18b | longitudinal portion of first through-cut |
| 19 | second through-cut in support member |
| 19a | lateral portion of second through-cut |
| 19b | longitudinal portion of second through-cut |
| 21 | first weld seam |
| 22 | second weld seam |
| 40 | rolling element bearing |
| 42 | bearing inner ring |
| 44 | bearing outer ring |
| 45 | outer surface of bearing outer ring |
| 46 | rolling elements |
| 48 | notch in bearing outer ring |
| l | length of support member |
| w | width of support member |
| t | thickness of support member |
| wₛₛ | width of sensing surface of support member |
| w_{w1} | width of first weld seam |
| w_{w2} | width of second weld seam |

## Claims

1. A bearing unit comprising a bearing (40) provided with one or more strain sensors (10, 10', 10") on a surface (5, 45) of the bearing, whereby the one or more strain sensors comprises a sensing element (14) integrated on a sensing surface (13) of a metal support member (12), the support member is executed as a flat plate that is attached to the bearing surface (5, 45),
**characterized in that**
the support member is attached to the bearing only by means of a first weld seam (21) and a second weld seam (22) located at first and second lateral ends of the support member.

2. Bearing unit according to claim 1, **characterized in that** the support member (12) has a predefined thickness (t) being such that when strain is induced on the sensing surface (13) of the support member (12) as a result of a deformation of the bearing surface (5, 45), a distance between the sensing surface (13) and a neutral plane of zero bending through the support member (12) is small enough to result in a bending strain of less than 10% of the total strain induced on the sensing surface (13).

3. Bearing unit according to claim 2, **characterized in that** the predefined thickness (t) is such that the bending strain induced on the sensing surface (13) of the support member (12) is less than 5% of the total strain induced.

4. Bearing unit according to any of the preceding claims, **characterized in that** the first weld seam (21) has a predefined cross-sectional area of attachment and the second weld seam (22) has a predefined cross-sectional area of attachment, whereby each predefined cross-sectional area is equal to or greater than a cross-sectional area of the support member (12) through the sensing surface (13) on which strain is sensed.

5. Bearing unit according to any of the preceding claims, **characterized in that** the sensing surface (13) has a width (wₛₛ) that is less than a width (w_{w1}) of the first weld seam (21) and less than a width (w_{w2}) of the second weld seam (22).

6. Bearing unit according to claim 5, **characterized in that** the support member (12) comprises a first through-cut (18) having a longitudinal portion (18b) that delimits a width (wₛₛ) of the sensing surface (13) in one direction.

7. Bearing unit according to claim 6, **characterized in that** the support member (12) further comprises a second through-cut (19) having a longitudinal portion (19b) that delimits the width (wₛₛ) of the sensing surface 13 in an opposite direction.

8. Bearing unit according to any of the preceding claims, **characterized in that** the bearing (40) is a rolling element bearing comprising an inner ring (42), an outer ring (44) and a plurality of rolling elements (46) disposed therebetween.

9. Bearing unit according to claim 8, **characterized in that** at least one of the one or more strain sensors (10, 10', 10") is provided on a radially outer surface (45) of the bearing outer ring (44) or on a radially inner surface of the bearing inner ring (42).

10. Bearing unit according to claim 8, **characterized in that** at least one of the one or more strain sensors (10, 10', 10") is provided on a side face of the bearing inner ring (42).

11. Bearing unit according to any of claims 8 to 10, **characterized in that** at least one of the one or more strain sensors (10, 10', 10") is provided in a notch (48) in the bearing outer ring (44) or in a notch in the bearing inner ring (42), the notch having a depth greater than the thickness (t) of the support member (12).

12. Bearing unit according to any of the preceding claims, **characterized in that** the strain sensor (10, 10', 10") comprises a thick-film resistor strain gauge printed on the sensing surface (13) of the support member (12).

13. Bearing unit according to any of claims 1 to 11, **characterized in that** the strain sensor (10, 10', 10") comprises a thin-film resistor strain gauge deposited on the sensing surface (13) of the support member (12).

14. Method of attaching a strain sensor (10, 10', 10") to a surface (5, 45) of bearing, where the strain sensor comprises a strain-sensing element 14 integrated on a sensing surface 13 of a flat metal plate (12),
**characterized in that**
the method comprises a step of attaching the flat metal plate (12) to the bearing surface (5, 45) only by means of a first weld seam (21) and a second weld seam (22) located at first and second lateral ends of the flat metal plate (12).

15. Method according to claim 14, **characterized in that** the first and second weld seams (21, 22) are produced in a welding or brazing process using a weld angle or braze angle of approximately ninety degrees.

16. Method according to claim 14 or 15, **characterized in that** the method comprises a step of pre-heating the lateral ends of the flat metal plate (12) and the bearing surface (5, 45) prior to attachment.

17. Method according to any of claims 14 to 16, **characterized in that** the method comprises a step of subjecting the first and second weld seams (21, 22) to a heat treatment.

18. Method according to any of claims 14 to 17, **characterized in that** the method comprises a step of subjecting the first and second weld seams (21, 22) to vibrational excitation.

## Patentansprüche

1. Lagereinheit, die ein Lager (40) umfasst, das mit einem oder mit mehreren Belastungssensoren (10, 10', 10") auf einer Oberfläche (5, 45) des Lagers versehen ist, wobei der eine oder die mehreren Belastungssensoren ein Sensorelement (14) umfassen, das auf einer sensorischen Erfassungsoberfläche (13) eines Metallträgerelements (12) integriert ist, wobei das Trägerelement als eine flache Platte ausgeführt ist, die an der Lageroberfläche (5, 45) befestigt ist,
**dadurch gekennzeichnet, dass**
das Trägerelement an dem Lager nur mittels einer ersten Schweißnaht (21) und einer zweiten Schweißnaht (22) befestigt ist, die an dem ersten bzw. an dem zweiten seitlichen Ende des Trägerelements angeordnet sind.

2. Lagereinheit nach Anspruch 1, **dadurch gekennzeichnet, dass** das Trägerelement (12) eine vordefinierte Dicke (t) aufweist, die derart ist, dass dann, wenn als ein Ergebnis einer Verformung der Lageroberfläche (5, 45) eine Belastung auf die sensorische Erfassungsoberfläche (13) des Trägerelements (12) ausgeübt wird, eine Entfernung zwischen der sensorischen Erfassungsoberfläche (13) und einer neutralen Ebene mit einer Durchbiegung von Null durch das Trägerelement (12) klein genug ist, um zu einer Biegebelastung von weniger als 10 % der gesamten Belastung zu führen, die auf die sensorische Erfassungsoberfläche (13) ausgeübt wird.

3. Lagereinheit nach Anspruch 2, **dadurch gekennzeichnet, dass** die vordefinierte Dicke (t) derart ist, dass die Biegebelastung, die auf die sensorische Erfassungsoberfläche (13) des Trägerelements (12) ausgeübt wird, kleiner als 5 % der gesamten verursachten Belastung ist.

4. Lagereinheit nach einem der vorhergehenden Ansprüche, **dadurch gekennzeichnet, dass** die erste Schweißnaht (21) eine vordefinierte Querschnittsfläche der Befestigung aufweist und dass die zweite Schweißnaht (22) eine vordefinierte Querschnittsfläche der Befestigung aufweist, wobei jede vordefinierte Querschnittsfläche gleich oder größer als eine Querschnittsfläche des Trägerelements (12) durch die sensorische Erfassungsoberfläche (13) ist, auf der die Belastung erfasst wird.

5. Lagereinheit nach einem der vorhergehenden Ansprüche, **dadurch gekennzeichnet, dass** die sensorische Erfassungsoberfläche (13) eine Breite (wₛₛ) aufweist, die kleiner als eine Breite (w_{w1}) der ersten Schweißnaht (21) und kleiner als eine Breite (w_{w2}) der zweiten Schweißnaht (22) ist.

6. Lagereinheit nach Anspruch 5, **dadurch gekennzeichnet, dass** das Trägerelement (12) einen ersten Durchstich (18) mit einem Längsabschnitt (18b) umfasst, der eine Breite (wₛₛ) der sensorischen Erfassungsoberfläche (13) in einer Richtung begrenzt.

7. Lagereinheit nach Anspruch 6, **dadurch gekennzeichnet, dass** das Trägerelement (12) ferner einen zweiten Durchstich (19) mit einem Längsabschnitt (19b) umfasst, der die Breite (wₛₛ) der sensorischen Erfassungsoberfläche (13) in einer entgegengesetzten Richtung begrenzt.

8. Lagereinheit nach einem der vorhergehenden Ansprüche, **dadurch gekennzeichnet, dass** das Lager (40) ein Wälzlager ist, das einen inneren Ring (42), einen äußeren Ring (44) und mehrere dazwischen angeordnete Wälzkörper (46) umfasst.

9. Lagereinheit nach Anspruch 8, **dadurch gekennzeichnet, dass** mindestens einer des einen oder der mehreren Belastungssensoren (10, 10', 10") auf einer radialen äußeren Oberfläche (45) des äußeren Lagerrings (44) oder auf einer radialen inneren Oberfläche des inneren Lagerrings (42) vorgesehen ist.

10. Lagereinheit nach Anspruch 8, **dadurch gekennzeichnet, dass** mindestens einer des einen oder der mehreren Belastungssensoren (10, 10', 10") auf einer Seitenfläche des inneren Lagerrings (42) vorgesehen ist.

11. Lagereinheit nach einem der Ansprüche 8 bis 10, **dadurch gekennzeichnet, dass** mindestens einer des einen oder der mehreren Belastungssensoren (10, 10', 10") in einem Einschnitt (48) in dem äußeren Lagerring (44) oder in einem Einschnitt in dem inneren Lagerring (42) vorgesehen ist, wobei der Einschnitt eine Tiefe aufweist, die größer als die Dicke (t) des Trägerelements (12) ist.

12. Lagereinheit nach einem der vorhergehenden Ansprüche, **dadurch gekennzeichnet, dass** die Belastungssensoren (10, 10', 10") einen Dehnungsmessstreifen eines Dickschichtwiderstandes, der auf die sensorische Erfassungsoberfläche (13) des Trägerelements (12) gedruckt ist, umfassen.

13. Lagereinheit nach einem der Ansprüche 1 bis 11, **dadurch gekennzeichnet, dass** die Belastungssensoren (10, 10', 10") einen Dehnungsmessstreifen eines Dickschichtwiderstandes, der auf die sensorische Erfassungsoberfläche (13) des Trägerelements (12) aufgetragen ist, umfassen.

14. Verfahren zum Befestigen eines Belastungssensors (10, 10', 10") an einer Oberfläche (5, 45) des Lagers, wobei der Belastungssensor ein die Belastung erfassendes Sensorelement 14 umfasst, das auf einer sensorischen Erfassungsoberfläche (13) einer flachen Metallplatte (12) integriert ist,
**dadurch gekennzeichnet, dass**
das Verfahren einen Schritt zum Befestigen der flachen Metallplatte (12) an der Lageroberfläche (5, 45) nur mittels einer ersten Schweißnaht (21) und einer zweiten Schweißnaht (22), die an dem ersten bzw. an dem zweiten seitlichen Ende der flachen Metallplatte (12) angeordnet sind, umfasst.

15. Verfahren nach Anspruch 14, **dadurch gekennzeichnet, dass** die erste und die zweite Schweißnaht (21, 22) in einem Schweiß- oder Hartlötprozess unter Verwendung eines Schweißwinkels oder Hartlötwinkels von annähernd neunzig Grad hergestellt werden.

16. Verfahren nach Anspruch 14 oder 15, **dadurch gekennzeichnet, dass** das Verfahren vor dem Befestigen einen Schritt des Vorwärmens der seitlichen Enden der flachen Metallplatte (12) und der Lageroberfläche (5, 45) umfasst.

17. Verfahren nach einem der Ansprüche 14 bis 16, **dadurch gekennzeichnet, dass** das Verfahren einen Schritt umfasst, um die erste und die zweite Schweißnaht (21, 22) einer Wärmebehandlung zu unterziehen.

18. Verfahren nach einem der Ansprüche 14 bis 17, **dadurch gekennzeichnet, dass** das Verfahren einen Schritt umfasst, um die erste und die zweite Schweißnaht (21, 22) einer Schwingungsanregung zu unterziehen.

## Revendications

1. Unité de palier comprenant un palier (40) équipée d'un ou plusieurs capteurs de déformation (10, 10', 10") sur une surface (5, 45) du palier, moyennant quoi ledit capteur de déformation comprend un élément de détection (14) intégré sur une surface de détection (13) d'un élément de support métallique (12), l'élément de support étant réalisé sous forme de plaque plate qui est fixée à la surface (5, 45) du palier,
**caractérisée en ce que** l'élément de support n'est fixé au palier qu'au moyen d'un premier cordon de soudure (21) et d'un second cordon de soudure (22) situés aux première et seconde extrémités latérales de l'élément de support.

2. Unité de palier selon la revendication 1, **caractérisée en ce que** l'élément de support (12) a une épaisseur (t) prédéfinie de telle façon que, quand une déformation est induite sur la surface de détection (13) de l'élément de support (12) à cause d'une déformation de la surface (5, 45) du palier, la distance entre la surface de détection (13) et un plan des fibres neutres à flexion nulle dans tout l'élément de support (12) est suffisamment faible pour entraîner une déformation due à la flexion inférieure à 10% de la déformation totale induite sur la surface de détection (13).

3. Unité de palier selon la revendication 2, **caractérisée en ce que** l'épaisseur (t) prédéfinie est telle que la déformation due à la flexion induite sur la surface de détection (13) de l'élément de support (12) est inférieure à 5% de la déformation totale induite.

4. Unité de palier selon l'une quelconque des revendications précédentes, **caractérisée en ce que** le premier cordon de soudure (21) a une superficie en coupe prédéfinie de fixation et le second cordon de soudure (22) a une superficie en coupe prédéfinie de fixation, moyennant quoi chaque superficie en coupe prédéfinie est supérieure ou égale à la superficie en coupe de l'élément de support (12) dans toute la surface de détection (13) sur laquelle la déformation est détectée.

5. Unité de palier selon l'une quelconque des revendications précédentes, **caractérisée en ce que** la surface de détection (13) a une largeur (wₛₛ) qui est inférieure à la largeur (w_{w1}) du premier cordon de soudure (21) et inférieure à la largeur (w_{w2}) du second cordon de soudure (22).

6. Unité de palier selon la revendication 5, **caractérisée en ce que** l'élément de support (12) comprend une première découpe complète (18) comportant une partie longitudinale (18b) qui délimite la largeur (wₛₛ) de la surface de détection (13) dans une direction.

7. Unité de palier selon la revendication 6, **caractérisée en ce que** l'élément de support (12) comprend en outre une seconde découpe complète (19) comportant une partie longitudinale (19b) qui délimite la largeur (wₛₛ) de la surface de détection (13) dans une direction opposée.

8. Unité de palier selon l'une quelconque des revendications précédentes, **caractérisée en ce que** le palier (40) est un palier à éléments de roulement comprenant une bague intérieure (42), une bague extérieure (44) et une pluralité d'éléments de roulement (46) disposés entre les deux.

9. Unité de palier selon la revendication 8, **caractérisée en ce qu'**au moins un desdits capteurs de déformation (10, 10', 10") est disposé sur la surface (45) radialement extérieure de la bague extérieure (44) du roulement ou sur la surface radialement intérieure de la bague intérieure (42) du roulement.

10. Unité de palier selon la revendication 8, **caractérisée en ce qu'**au moins un desdits capteurs de déformation (10, 10', 10") est disposé sur une face latérale de la bague intérieure (42) du roulement.

11. Unité de palier selon l'une quelconque des revendications 8 à 10, **caractérisée en ce qu'**au moins un desdits capteurs de déformation (10, 10', 10") est disposé dans une encoche (48) de la bague extérieure (44) du roulement ou dans une encoche de la bague intérieure (42) du roulement, l'encoche ayant une profondeur supérieure à l'épaisseur (t) de l'élément de support (12).

12. Unité de palier selon l'une quelconque des revendications précédentes, **caractérisée en ce que** le capteur de déformation (10, 10', 10") comprend un extensomètre à résistance à couche épaisse imprimé sur la surface de détection (13) de l'élément de support (12).

13. Unité de palier selon l'une quelconque des revendications 1 à 11, **caractérisée en ce que** le capteur de déformation (10, 10', 10") comprend un extensomètre à résistance à couche épaisse déposé sur la surface de détection (13) de l'élément de support (12).

14. Procédé de fixation d'un capteur de déformation (10, 10', 10") sur une surface (5, 45) de palier, où le capteur de déformation comprend un élément de détection de déformation (14) intégré sur une surface de détection (13) d'une plaque métallique plate (12), **caractérisé en ce que** le procédé comprend une étape de fixation de la plaque métallique plate (12) à la surface (5, 45) du palier uniquement au moyen d'un premier cordon de soudure (21) et d'un second cordon de soudure (22) situés aux première et seconde extrémités latérales de la plaque métallique plate (12).

15. Procédé selon la revendication 14, **caractérisé en ce que** les premier et second cordons de soudure (21, 22) sont réalisés par un processus de soudage ou de brasage en utilisant un angle de soudage ou un angle de brasage d'à peu près quatre-vingt-dix degrés.

16. Procédé selon la revendication 14 ou 15, **caractérisé en ce que** le procédé comprend une étape de préchauffage des extrémités latérales de la plaque métallique plate (12) et de la surface (5, 45) du palier avant l'étape de fixation.

17. Procédé selon l'une quelconque des revendications 14 à 16, **caractérisé en ce que** le procédé comprend une étape de traitement thermique des premier et second cordons de soudure (21, 22).

18. Procédé selon l'une quelconque des revendications 14 à 17, **caractérisé en ce que** le procédé comprend une étape d'excitation par vibrations des premier et second cordons de soudure (21, 22).
